# EUROPEAN PATENT APPLICATION

(11) **EP 4 563 910 A2**
(43) Date of publication of application: **04.06.2025**
(21) Application number: 24215503.4
(22) Date of filing: 26.11.2024
(51) Int. Cl.: F24F 11/84

(54) **BUFFER TANK ASSEMBLIES FOR CLIMATE CONTROL SYSTEMS**

(30) Priority: 01.12.2023 US 202318527098
(71) Applicant: Trane International Inc., Davidson, NC 28036 (US)
(72) Inventor: CLINE, Lee R, Davidson, North Carolina, 28036 (US); KEYS, Daryl, Davidson, North Carolina, 28036 (US); COLEMAN, Robert L, Davidson, North Carolina, 28036 (US)
(74) Representative: Haseltine Lake Kempner LLP

(57) **Abstract**

An embodiment of a buffer tank for a hydronic climate control system includes a buffer tank including an inlet port and an outlet port, an inlet line connected to the inlet port, and an outlet line connected to the outlet port. In addition, the buffer tank assembly includes a bypass line connected to the inlet line and the outlet line so that the buffer tank assembly defines a first flow path from the inlet line to the outlet line through the buffer tank and a second flow path from the inlet line to the outlet line through the bypass line. Further, the buffer tank assembly includes a flow control device in fluid communication with the buffer tank and the bypass line, wherein the flow control device is actuatable to control fluid flow along the first flow path and the second flow path.

## Description

### CROSS-REFERENCE TO RELATED APPLICATIONS

### TECHNOLOGICAL FIELD

This disclosure generally relates to climate control systems. More particularly, this disclosure relates to buffer tank assemblies for a climate control system and related methods.

### BACKGROUND

A climate control system may be configured to maintain a temperature and/or humidity of an indoor space. In some climate control systems, one or more fluids may be circulated to exchange heat between the indoor space and an ambient environment (e.g., such as an outdoor environment). Some climate control systems, such as hydronic heating, ventilation, and air conditioning (HVAC) systems, may utilize a water (or water-containing) fluid circuit to cool or heat an indoor space during operations.

### BRIEF SUMMARY

Some embodiments disclosed herein are directed to a climate control system. In some embodiments, the climate control system includes a first heat exchanger assembly, a second heat exchanger assembly, and a fluid circuit configured to circulate a fluid between the first heat exchanger assembly and the second heat exchanger assembly. The fluid circuit includes a supply line configured to flow fluid from the first heat exchanger assembly to the second heat exchanger assembly, and a buffer tank assembly positioned along the supply line, the buffer tank assembly including a buffer tank and a flow control device. The buffer tank assembly includes a first flow path that extends through the buffer tank and a second flow path that bypasses the buffer tank. In addition, the fluid circuit includes one or more sensors configured to detect a temperature of fluid in the fluid circuit. Further, the fluid circuit includes a controller that is configured to actuate the flow control device to adjust a flow rate along the first flow path and the second flow path based on an output from the one or more sensors to store thermal energy in or distribute thermal energy from the buffer tank.

Some embodiments disclosed herein are directed to a method of operating a climate control system. In some embodiments, the method includes (a) exchanging heat between an ambient environment and a fluid with a first heat exchanger assembly of the climate control system. In addition, the method includes (b) flowing the fluid to a buffer tank assembly positioned along a supply line of a fluid circuit after (a), wherein the buffer tank assembly includes: a buffer tank; a first flow path that extends through the buffer tank; and a second flow path that bypasses the buffer tank. Further, the method includes (c) detecting a temperature of the fluid in the fluid circuit and (d) adjusting a flow rate of the fluid along the first flow path and the second flow path to a second heat exchanger assembly of the climate control system based at least in part on the temperature so as to store thermal energy in or distribute energy from the buffer tank. Still further, the method includes (e) exchanging heat between the fluid and at least one conditioned space with the second heat exchanger assembly after (d).

Some embodiments disclosed herein are directed to a buffer tank assembly for a hydronic climate control system. In some embodiments, the buffer tank assembly includes a buffer tank including an inlet port and an outlet port, an inlet line connected to the inlet port, and an outlet line connected to the outlet port. In addition, the buffer tank assembly includes a bypass line connected to the inlet line and the outlet line so that the buffer tank assembly defines a first flow path from the inlet line to the outlet line through the buffer tank and a second flow path from the inlet line to the outlet line through the bypass line. Further, the buffer tank assembly includes a flow control device in fluid communication with the buffer tank and the bypass line, wherein the flow control device is actuatable to control fluid flow along the first flow path and the second flow path.

Embodiments described herein comprise a combination of features and characteristics intended to address various shortcomings associated with certain prior devices, systems, and methods. The foregoing has outlined rather broadly the features and technical characteristics of the disclosed embodiments in order that the detailed description that follows may be better understood. The various characteristics and features described above, as well as others, will be readily apparent to those having ordinary skill in the art upon reading the following detailed description, and by referring to the accompanying drawings. It should be appreciated that this disclosure may be readily utilized as a basis for modifying or designing other structures for carrying out the same purposes as the disclosed embodiments. It should also be realized that such equivalent constructions do not depart from the spirit and scope of the principles disclosed herein.

### BRIEF DESCRIPTION OF THE DRAWINGS

For a detailed description of various embodiments, reference will now be made to the accompanying drawings in which:
FIG. 1 is a schematic diagram of a climate control system including a buffer tank assembly according to some embodiments disclosed herein;
FIGS. 2A and 2B are schematic diagrams of the buffer tank assembly of the climate control system of FIG. 1 during various modes of operation according to some embodiments disclosed herein;
FIG. 3 is a schematic diagram of an embodiment of the buffer tank assembly of the climate control system of FIG. 1 according to some embodiments disclosed herein;
FIG. 4 is a schematic diagram of a climate control system including a buffer tank assembly according to some embodiments disclosed herein;
FIG. 5 is a schematic diagram of a climate control system including a buffer tank assembly according to some embodiments disclosed herein;
FIGS. 6A and 6B are schematic diagrams of the climate control system of FIG. 5 during various modes of operation according to some embodiments disclosed herein;
FIGS. 7A-7C are schematic diagrams of the climate control system of FIG. 5 in various modes of options to store thermal energy in a thermal energy storage system according to some embodiments disclosed herein; and
FIG. 8 is a diagram of a method of operating a climate control system according to some embodiments disclosed herein.

### DETAILED DESCRIPTION

As previously described, a climate control system may utilize one or more fluid circuits to transfer heat between an indoor space and an ambient environment (e.g., such as an outdoor environment). For instance, hydronic HVAC systems such as an air-to-water heat pump (AWHP), or a chiller unit may employ a plurality of fluid circuits to transfer heat between the ambient environment and an indoor space. Specifically, within a hydronic HVAC system, a refrigerant circuit may exchange heat with the outdoor environment and a separate water circuit may exchange heat between the refrigerant circuit and the indoor space (or an airflow directed therethrough). During operation, the water circuit may undergo large fluctuations in temperature due, for instance, to changing fluid conditions, different modes of operation for the climate control system, etc. In some circumstances, these fluctuations in the water circuit temperature may result in a reduction or loss of heating or cooling performance for one or more portions of the climate control system, which may negatively impact occupant comfort in the indoor space or may push the water circuit temperature outside of the reliable operating range of the hydronic HVAC system (or one or more components thereof). Thus, in some embodiments, a buffer tank may be included along the water circuit to smooth out and/or limit temperature fluctuations during operations. However, such buffer tanks are often undersized due to installation expense, lack of available space (or undesirable aesthetics) and may lack adequate temperature moderating functionality. As a result, conventional buffer tanks often suffer from poor performance.

Accordingly, embodiments disclosed herein include buffer tank assemblies for a fluid circuit of a climate control system (e.g., such as a hydronic climate control system) that are configured to counteract temperature fluctuations in the fluid circuit and thereby preserve occupant comfort in the indoor space and aid in reliable system operation. In some embodiments, the buffer tank assemblies of the embodiments disclosed herein may have enhanced and dynamic flow control functionality that may further allow for a smaller or reduced size of the buffer tank without effecting the overall performance thereof. Accordingly, through use of the embodiments disclosed herein, a buffer tank assembly may more effectively counteract temperature fluctuations in the water circuit of a hydronic climate control system so as to improve an overall performance and efficiency of the climate control system.

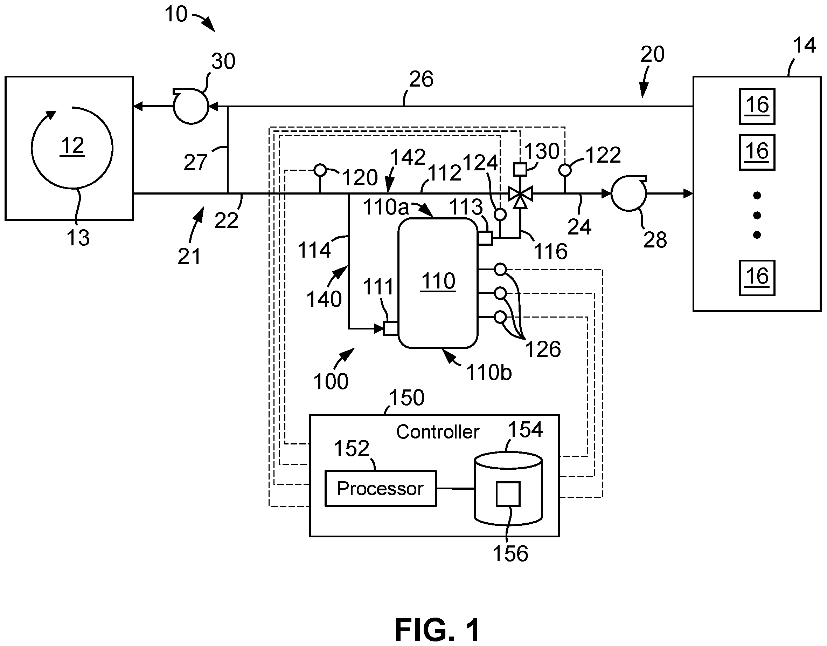

Referring now to FIG. 1, a climate control system 10 including a dynamic buffer tank assembly 100 (or more simply "buffer tank assembly 100") is shown according to some embodiments. The climate control system 10 includes a first heat exchanger assembly 12, a second heat exchanger assembly 14, and a fluid circuit 20 configured to circulate a fluid between the first heat exchanger assembly 12 and the second heat exchanger assembly 14. The buffer tank assembly 100 is coupled and incorporated int the fluid circuit 20 between the first heat exchanger assembly 12 and the second heat exchanger assembly 14. Thus, the buffer tank assembly 100 may be said to form at least a portion of the fluid circuit 20.

In some embodiments, the climate control system 10 may comprise a hydronic climate control system (such as a hydronic HVAC system), and the fluid circuit 20 is configured to circulate water (or a water-containing fluid such as a water-glycol mixture) between the first heat exchanger assembly 12 and the second heat exchanger assembly 14 to transfer heat therebetween. Specifically, the first heat exchanger assembly 12 and the second heat exchanger assembly 14 may each include one or more heat exchangers (not specifically shown) that are configured to transfer heat between the fluid circuit 20 and another fluid, medium, or environment.

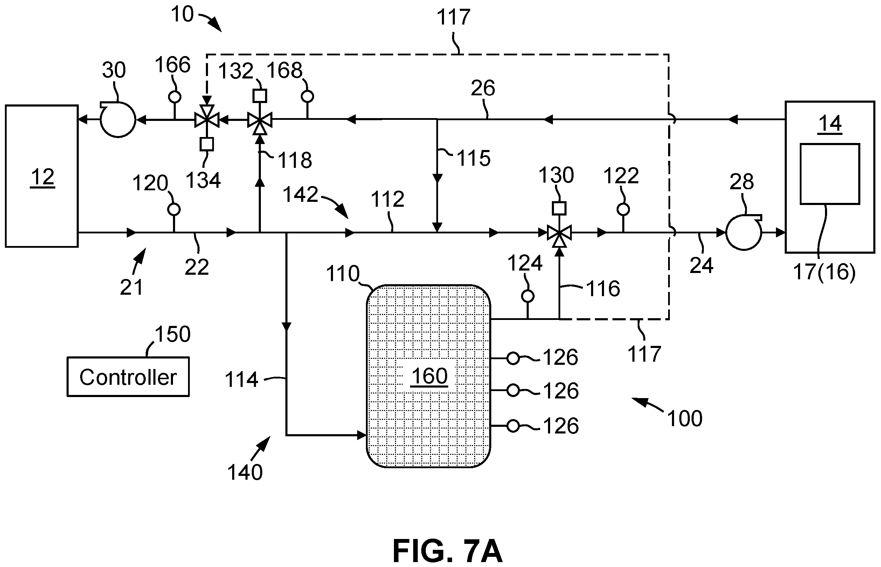

For example, in some embodiments the climate control system 10 may comprise an AWHP, a chiller unit, or other hydronic HVAC system. Thus, in some embodiments, the first heat exchanger assembly 12 may be configured to transfer heat between the fluid circuit 20 and an ambient, outdoor environment, and the second heat exchanger assembly 14 comprise a distribution assembly (e.g., an air handler unit) that is configured to transfer heat (via one or more heat exchangers) between the fluid circuit 20 and one or more conditioned spaces 16. In some embodiments, the one or more conditioned spaces 16 may comprise one or more indoor spaces of a larger building (e.g., an office building, apartment complex, industrial complex, etc.), one or more thermal energy storage (TES) systems (e.g., ice-based thermal storage cooling/heating systems such as TES 17 shown in FIGS. 7A-7C and described herein), one or more hot water generation systems, etc. In some embodiments, the second heat exchanger assembly 14 may include an air handler unit that is configured to circulate air (e.g., that has been heated or cooled via heat exchange with the fluid circuit 20) to one or more of the conditioned spaces 16.

The climate control system 10 may be operated to cool or heat the conditioned spaces 16. For instance, in some embodiments, the climate control system 10 may be operated in a cooling mode whereby heat is transferred from the one or more conditioned spaces 16 to the fluid circuit 20 via the second heat exchanger assembly 14 (to thereby cool the one or more conditioned spaces 16), and then the heat is transferred from the fluid circuit 20 to the ambient environment via the first heat exchanger assembly 12. Conversely, in some embodiments, the climate control system 10 may be operated in a heating mode whereby heat is transferred from the ambient environment to the fluid circuit 20 via the first heat exchanger assembly 12, and then the heat is transferred from the fluid circuit 20 to the one or more conditioned spaces 16 via the second heat exchanger assembly 14 (to thereby heat the one or more conditioned spaces 16).

In some embodiments (e.g., such as when the climate control system 10 is configured as an AWHP or as a chiller), the first heat exchanger assembly 12 may include a refrigerant fluid circuit 13 that is configured to exchange heat between the fluid circuit 20 and the ambient environment. For instance, the refrigerant fluid circuit 13 may circulate a refrigerant between one or more (e.g., such as a pair of) heat exchangers so as to controllable vaporize and condense the refrigerant to thereby facilitate heat transfer between the ambient environment and the fluid circuit 20. When the climate control system 10 is configured as an AWHP, the first heat exchanger assembly 12 may circulate the refrigerant in a first direction in the refrigerant fluid circuit 13 to operate the climate control system 10 in the cooling mode, and may circulate the refrigerant in a second, opposite direction in the refrigerant fluid circuit 13 to operate the climate control system 10 in the heating mode.

The fluid circuit 20 may include a plurality of pipes, tube, hoses, conduits, and/or lines (generally and generically referred to as "lines" herein) that direct fluid between the first heat exchanger assembly 12 and the second heat exchanger assembly 14. In some embodiments, the fluid circuit 20 may include a supply line 21 that generally directs fluid from the first heat exchanger assembly 12 to the second heat exchanger assembly 14, and a return line 26 that generally directs fluid from the second heat exchanger 14 to the first heat exchanger assembly 12.

One or more pumps 28, 30 may be positioned along or within the fluid circuit 20 in order to drive the flow of fluid therealong. For instance, in some embodiments, a first or charge pump 28 may be positioned along the supply line 21 so as to flow fluid to the second heat exchanger assembly 14, and a second or return pump 30 may be positioned along the return line26 so as to flow fluid to the first heat exchanger assembly 12. The pumps 28, 30 may comprise any suitable pump design or type, such as, for instance centrifugal pumps, positive displacement pumps, etc. A decoupler pipe 27 may extend between the supply line 21 and the return line 26 to provide fluid communication between the supply line 21 and return line 26 so that the flow rates through the pumps 30, 28 may be independently and separately controlled.

Referring still to FIG. 1, the buffer tank assembly 100 may be coupled to and integrated within the fluid circuit 20. For instance, the buffer tank assembly 100 may be positioned along the supply line 21 so that the buffer tank assembly 100 separates the supply line 21 into a first or inlet line 22 extending between the first heat exchanger assembly 12 and the buffer tank assembly 100 and a second or outlet line 24 extending between the buffer tank assembly 100 and the second heat exchanger assembly 14.

The buffer tank assembly 100 includes a buffer tank 110 that may include any suitable vessel or container that is configured to hold a volume of fluid from the fluid circuit 20 therein. While the volume or capacity of the buffer tank 110 may be varied and chosen based on the various parameters of the climate control system 10 (e.g., such as the desired cooling or heating capacity thereof), in some embodiments, the capacity of the buffer tank 110 may range from about 2.4 gallons per ton of cooling or heating capacity of the climate control system 10 to about 40 gallons per ton of cooling or heating capacity of the climate control system 10. In some embodiments, the buffer tank 110 may include a plurality of buffer tanks 110 connected in parallel or series between the inlet line 22 and outlet line 24.

The buffer tank 110 may include a tank or other vessel with no, or substantially no, additional screens, plates, baffles, or other structures positioned therein. However, in some embodiments, the buffer tank 110 may include one or more such additional structures so as to direct the flow of fluid through the buffer tank 110, adjust the stratification of fluid temperature (or temperature gradient) throughout the buffer 110, among other functions.

In addition, as shown in FIG. 1, the buffer tank 110 may include an inlet (or "inlet port") 111 and an outlet (or "outlet port 113"). In some embodiments, the inlet 111 may be positioned more proximate to a bottom end 110b than a top end 110a of the buffer tank 110, and the outlet 113 may be positioned more proximate the top end 110a than the bottom end 11 0b. Thus, the inlet 111 may be more proximate the bottom end 110b than the outlet 113, and the outlet 113 may be more proximate the top end 110a than the inlet 111. The top end 110a and the bottom end 110b may be arranged so that the bottom end 110b is at a vertically lower height than the top end 110a, and generally speaking, the top end 110a and bottom end 110b may be spaced from one another along the direction of gravity.

A buffer tank inlet line 114 branches off of the inlet line 22 and extends to the inlet 111 of buffer tank 110. In addition, a buffer tank outlet line 116 extends from the outlet 113 of buffer tank 110 to the outlet line 24. As a result, the buffer tank inlet line 114, buffer tank 110, and buffer tank outlet line 116 form or define a first flow path 140 extending through the buffer tank assembly 100 from the inlet line 22 to the outlet line 24 that flows through the buffer tank 110.

Also, a bypass line 112 extends between the inlet line 22 and the outlet line 24 that bypasses the buffer tank 110. For instance, in some embodiments, the bypass line 112 extends from the intersection of the inlet line 22 and the buffer tank inlet line 114 to the intersection of the buffer tank outlet line 116 and the outlet line 24. As a result, the bypass line 112 forms or defines a second flow path 142 extending through the buffer tank assembly 100 from the inlet line 22 to the outlet line 24 that bypasses the buffer tank 110.

A flow control device 130 is positioned at the intersection of the bypass line 112, the buffer tank outlet line 116, and the outlet line 24. The flow control device 130 may comprise a control valve, such as a three-way control valve that is configured to control fluid flow along the first flow path 140 and the second flow path 142 during operations. In particular the flow control device 130 may include a plurality of ports - with a first port being in fluid communication with the bypass line 112, a second port being in fluid communication with the buffer tank outlet line 116, and a third port being in fluid communication with the outlet line 24. During operations, the flow control device 130 may be actuated (e.g., by a controller such as controller 150 described herein) to a plurality of positions so as to adjust a flow rate along the first flow path 140 and the second flow path 142. For example, the flow control device 130 may be actuated to selectively: (1) allow or prevent flow along the first flow path 140; (2) allow or prevent flow along the second flow path 142; or (3) allow a blended flow along both the first flow path 140 and the second flow path 142.

One or more sensors may be connected to the buffer tank assembly 100 and/or fluid circuit 20 in order to detect or measure one or more parameters of the fluid flowing therethrough (or values indicative thereof). For instance, a sensor 120 may be positioned along the inlet line 22, another sensor 122 may be positioned along the outlet line 24, still another sensor 124 may be positioned along the buffer tank outlet line 116, and a plurality of sensors 126 may be positioned in or on the buffer tank 110.

The sensors 120, 122, 124, 126 may be configured to measure the temperature of the fluid flowing through the corresponding point/portion of the fluid circuit 20 and/or buffer tank assembly 100. Thus, the sensors 120, 122, 124, 126 may each comprise any suitable sensing device, array, or assembly that is configured to detect or measure the fluid temperature or a value or parameter that is indicative of the fluid temperature. For instance, in some embodiments, the sensors 120, 122, 124, 126 may comprise thermistors, thermocouples, resistive temperature sensors, semiconductor-based sensors, etc.

The climate control system 10 may also include a controller 150 that is communicatively coupled to the flow control device 130 and the sensors 120, 122, 124, 126 (or at least some of the sensors 120, 122, 124, 126). Generally speaking, the controller 150 may adjust the flow control device 130 (and/or the flow control devices 132, 134 described in more detail herein according to some embodiments) so as to selectively adjust a flow rate of fluid along the first flow path 140 and the second flow path 142 during operations with the climate control system 10. Specifically, controller 150 may be configured to actuate the flow control device 130 to adjust a flow rate along each of the first flow path 140 and second flow path 142 to achieve a desired temperature of fluid in the outlet line 24 for the second heat exchanger assembly 14. As described in more detail below, the controller 150 may actuate the flow control device 130 based on an output from one or more of the sensors 120, 122, 124, 126 so as to ensure a desired temperature of fluid to the second heat exchanger assembly 14 during operations. Thus, the controller 150 may be communicatively coupled to the flow control device 130 and the sensors 120, 122, 124, 126. For instance, the controller 150 may be communicatively coupled to the flow control device 130 and the sensors 120, 122, 124, 126 via any suitable wired and/or wireless connection.

The controller 150 may be (or may be incorporated within) a main or master controller for the climate control system 10, or the controller 150 may be a standalone controller 150 for controlling the flow of fluid through the buffer tank assembly 100. In some embodiments, the controller 150 may be included or incorporated into one or more of the flow control device 130 (or one or more of the flow control devices 132, 134 described in more detail herein), and/or other components or assemblies of the climate control system 10. Regardless, the controller 150 may be described and referred to herein as being a part of the climate control system 10 or the buffer tank assembly 100.

The controller 150 may comprise one or more computing devices, such as a computer, tablet, smartphone, server, circuit board, or other computing device(s) or system(s). Thus, controller 150 may include a processor 152 and a memory 154.

The processor 152 may include any suitable processing device or a collection of processing devices. In some embodiments, the processor 152 may include a microcontroller, central processing unit (CPU), graphics processing unit (GPU), timing controller (TCON), scaler unit, or some combination thereof. During operations, the processor 152 executes machine-readable instructions (such as machine- readable instructions 156) stored on memory 154, thereby causing the processor 152 to perform some or all of the actions attributed herein to the controller 150. In general, processor 152 fetches, decodes, and executes instructions (e.g., machine-readable instructions 156). In addition, processor 152 may also perform other actions, such as, making determinations, detecting conditions or values, etc., and communicating signals. If processor 152 assists another component in performing a function, then processor 152 may be said to cause the component to perform the function.

The memory 154 may be any suitable device or collection of devices for storing digital information including data and machine-readable instructions (such as machine-readable instructions 156). For instance, the memory 154 may include volatile storage (such as random-access memory (RAM)), non-volatile storage (e.g., flash storage, read-only memory (ROM), etc.), or combinations of both volatile and non-volatile storage. Data read or written by the processor 152 when executing machine-readable instructions 306 can also be stored on memory 154. Memory 154 may include "non-transitory machine-readable medium," where the term "non-transitory" does not include or encompass transitory propagating signals.

The processor 152 may include one processing device or a plurality of processing devices that are distributed within (or communicatively coupled to) controller 150 or more broadly within climate control system 10. Likewise, the memory 154 may include one memory device or a plurality of memory devices that are distributed within (or communicatively coupled to) controller 150 or more broadly within climate control system 10. Thus, the controller 150 may comprise a plurality of individual "controllers" distributed throughout the climate control system 10. For instance, each flow control device (e.g., flow control devices 130, 132, 134) may include a dedicated controller having a processor and a memory as described herein.

As previously described, in some embodiments, the climate control system 10 may operate in a heating mode, whereby heat is transferred from the outdoor, ambient environment to one or more of the conditioned spaces 16 via the fluid circuit 20. During these operations, the first heat exchanger assembly 12 may operate to increase a temperature of the fluid flowing in the fluid circuit 20. As a result, during a heating mode operation, the fluid flowing along the supply line 21 (including the inlet line 22, buffer tank assembly 100, and outlet line 24) may be at an elevated temperature. For instance, in some embodiments, the fluid flowing along the supply line 21 may be from about 95°F to about 180°F, such as at about 120°F, during a heating mode operation of the climate control system 10. The second heat exchanger assembly 14 may transfer at least some of this heat to one or more of the conditioned spaces 16 as previously described so that the temperature of the water flowing back to the first heat exchanger assembly 12 via return line 26 may be less than that flowing through the supply line 21. For instance, in some embodiments, the temperature of the fluid flowing along the return line 26 may be about from 80°F to about 160°F, such as at about 90°F, during a heating mode operation.

During these operations, the controller 150 may actuate the flow control device 130 so that at least some of the fluid flowing into the outlet line 24 may route through the buffer tank 110 via the first flow path 140. As a result, the buffer tank 110 may fill with the higher temperature fluid flowing along the supply line 21 during the heating mode operation. In some embodiments, the controller 150 may actuate the flow control device 130 so that at least some of the fluid flowing into the outlet line 24 is routed through the bypass line 112 via the second flow path 142. Alternatively, during the normal, heating operations, the controller 150 may actuate the flow control device 130 so that all of the fluid flowing through the supply line 21 between the first heat exchanger assembly 12 and second heat exchanger assembly 14 is routed through the first flow path 140 (and therefore through the buffer tank 110).

However, while operating in the heating mode one or more of the heat exchangers of the first heat exchanger assembly 12 may accumulate ice, which may diminish the heat exchange functionality thereof. Accordingly, in some embodiments, the first heat exchanger assembly 12 may be operated in a defrost mode to melt accumulated ice and thereby facilitate the heating performance of the climate control system 10. During a defrost operation, the refrigerant circuit 13 may be operated in reverse (e.g., relative to a normal heating mode operation) so as to resemble operation during a cooling mode of the climate control system 10 as previously described. As a result, operation of the first heat exchanger assembly 12 in the defrost mode may result in a colder temperature for the fluid flowing along supply line 21 of the fluid circuit 20. For instance, in some embodiments, the fluid flowing along supply line 21 may be substantially below 100°F, such as for instance, about 60°F, about 40°F, or less when the first heat exchanger assembly 12 is operating in a defrost mode.

To further complicate matters, when first heat exchanger assembly 12 is performing a defrost operation, the climate control system 10 may still be operating in a heating mode. Thus, the colder fluid temperature output by the first heat exchanger assembly 12 may reduce a temperature of fluid provided to the second heat exchanger assembly 14 via fluid circuit 20, which may in turn reduce a heating performance of the second heat exchanger assembly 14 for the one or more of the conditioned spaces 16. Accordingly, the controller 150 may actuate the flow control device 130 of the buffer tank assembly 100 so as to prevent or reduce the drop in temperature of the fluid provided to the second heat exchanger assembly 14 during and after a defrost operation.

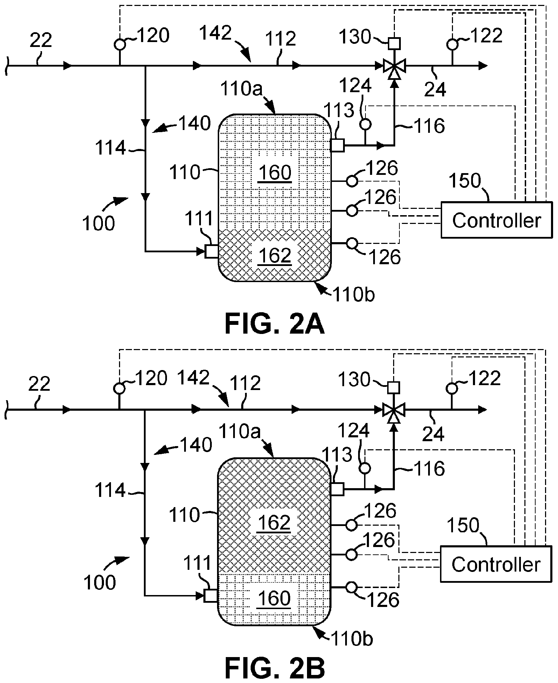

For instance, FIG. 2A illustrates the flow of fluid through the buffer tank assembly 100 during a defrost mode or operation of the first heat exchanger assembly 12 of climate control system 10. For convenience, FIG. 2A (and also FIG. 2B discussed below) illustrate a portion of the climate control system 10 so as to simplify the drawings and more clearly show the operation of the buffer tank assembly 100.

As shown in FIG. 2A, during the defrost operation, the controller 150 may actuate the flow control device 130 so as to mix the higher temperature fluid in the buffer tank 110 into the lower temperature fluid flowing through the bypass line 112 so as to achieve a desired minimum temperature in the outlet line 24 for flowing to the second heat exchanger 14 and thereby ensure adequate heating performance thereof. The controller 150 may receive an output from one or more of the temperature sensors 120, 122, 124, 126, and may determine a suitable mixture of the fluid via both the first flow path 140 (through the buffer tank 110) and second flow path 142 (through the bypass line 112). Specifically, the controller 150 may monitor a temperature of fluid in the outlet line 24 via the temperature sensor 122, and may adjust the position of the flow control device 130 to add additional higher temperature fluid from the buffer tank 110 via the buffer tank outlet line 116 until a minimum temperature is achieved (e.g., via a so-called "feedback" control scheme). In some embodiments, the minimum temperature for the fluid flowing in the outlet line 24 may be less than the normal temperature of fluid flowing to the second heat exchanger assembly 14 during a heating mode operation, but it may be greater than a temperature of the fluid output from the first heat exchanger assembly 12 during a defrost operation as previously described. For instance, in some embodiments, the minimum temperature of the fluid in the outlet line 24 may be about 75°F or higher. The minimum temperature of the fluid in outlet line 24 may be selected to provide an acceptable heating performance for the second heat exchanger 14 (or at least prevent a cooling effect from the second heat exchanger 14) while minimizing the outflow from buffer tank 110 in order to conserve the thermal energy stored therein.

In some embodiments, the controller 150 may utilize the output from one or more of the temperature sensors that are upstream of the flow control device 130 to determine an appropriate position for the flow control device 130 for providing the minimum temperature fluid to the second heat exchanger assembly 14 (e.g., via a so-called "feedforward" control scheme). For instance, the controller 150 may determine a position of the flow control device 130 based on a comparison of the temperature of the fluid output from the first heat exchanger assembly 12 via the sensor 120 and the temperature of the fluid in the buffer tank 110 via one or more of the sensor 124 and/or the sensors 126.

As the higher temperature fluid is metered out from the buffer tank 110 via the flow control device 130, the higher temperature fluid in buffer tank 110 may be displaced via the colder fluid output from the first heat exchanger assembly 12. In particular, FIG. 2A shows the higher temperature fluid 160 being displaced out of the outlet 113 by the colder fluid 162 entering the buffer tank 110 via the inlet 111.

The controller 150 may monitor the outputs from the sensor 124, and the sensors 126 to determine a remaining volume of higher temperature water in the buffer tank 110. The controller 150 may then use this determination to affect continued metering of the higher temperature water into the outlet line 24 via the flow control device 130 as previously described. For instance, without being limited to this or any other theory, it may be desirable to maintain as much stored thermal energy (via the higher temperature fluid) in the buffer tank 110 as possible. As a result, the controller 150 may reduce a flow rate of fluid out of the buffer tank 110 via the buffer tank outlet line 116 and flow control device 130 as the volume of higher temperature fluid in the buffer tank 110 is reduced. Additionally or alternatively, the climate control system 10 may cease the defrost operation of the first heat exchanger assembly 12 (e.g., via the controller 150 or another controller or control system communicatively coupled to the climate control system 10) when a volume of high temperature fluid in the buffer tank 110 falls below a predetermined level (e.g., as indicated by the sensors 126) and/or when an average temperature in the buffer tank 110 falls below a threshold (e.g., as indicated by the sensors 124, 126).

Referring now to FIG. 2B, following the defrost operation, the climate control system 10 and particularly the first heat exchanger assembly 12 may be operated in a normal heating mode so that the temperature of the fluid emitted from the first heat exchanger assembly 12 may be increased. However, the buffer tank 110 may still be filled or substantially filled with colder temperature fluid 162 as a result of the defrost operation. Thus, the controller 150 may actuate the flow control device 130 so as to "recharge" the buffer tank 110 (as a result, the subsequent heating mode operation of the climate control system following a defrost operation may be referred to as a "recharge operation").

Specifically, without being limited to this or any other theory, it may be desirable to flush the colder fluid out of the buffer tank 110 with the higher temperature fluid being output from the first heat exchanger assembly 12 as quickly as possible so as to ensure that the buffer tank 110 is re-charged with higher temperature fluid for the next defrost operation (or other operation or condition wherein the temperature of the fluid output from the first heat exchanger assembly 12 falls below a desirable or acceptable level). However, flooding the outlet line 24 with the colder temperature fluid from the buffer tank 110 may again cause the second heat exchanger 14 to lose heating capacity for the one or more conditioned spaces 16. Thus, the controller 150 may actuate the flow control device 130 to allow some of the colder temperature fluid from the buffer tank 110 to mix with the higher temperature water flowing through the bypass line 112 so as to provide fluid of at least a minimal temperature to the second heat exchanger assembly 14 so that the colder fluid may be flushed from buffer tank 110 overtime without negatively affecting the performance of the second heat exchanger assembly 14.

As previously described for the defrost operation shown in FIG. 2A, the controller 150 may control the flow rate out of the buffer tank 110 via the flow control device 130 based on an output from one or more of the temperature sensors 120, 122, 124, 126. For instance, the controller 150 may control the flow rate of fluid out of the buffer tank 110 via a feedback control scheme using the sensor 122, a feedforward control scheme using one or more of the sensors 120, 124, 126, or some combination thereof.

Further, the controller 150 may monitor the outputs from the sensors 124 and/or 126 to determine when the buffer tank 110 has been fully recharged with higher temperature fluid. At this point the controller 150 may actuate the flow control device 130 to a suitable position for normal heating mode operations as previously described.

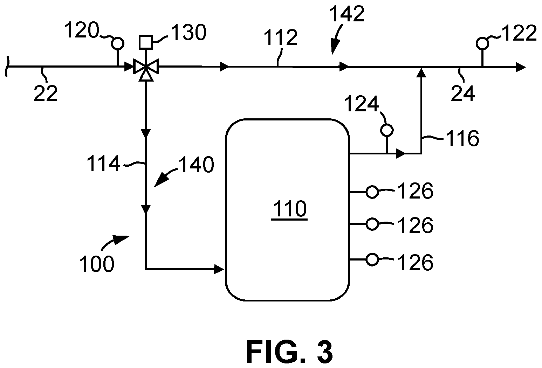

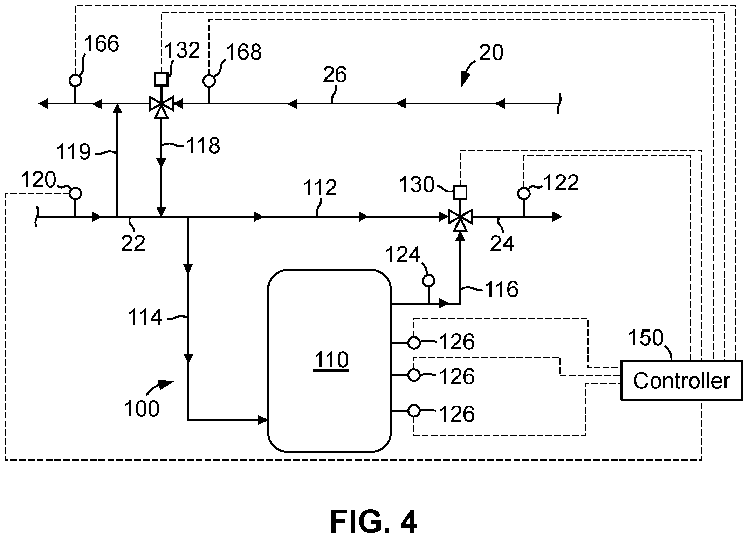

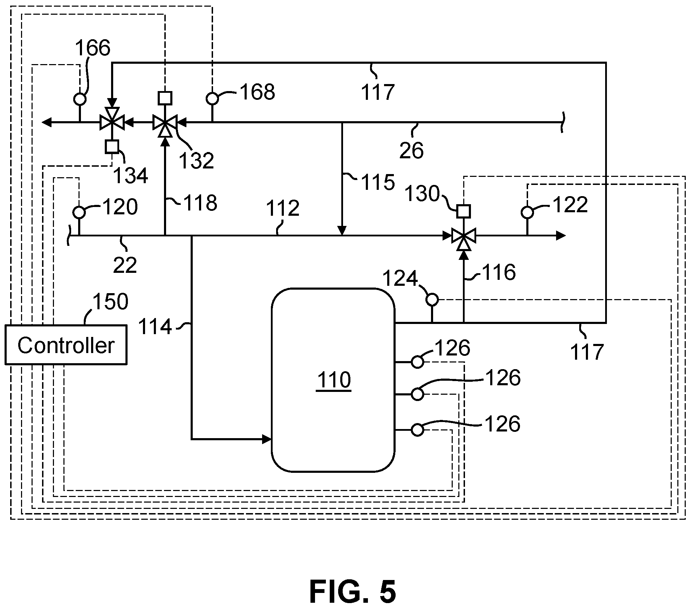

Referring now to FIG. 3, in some embodiments, the flow control device 130 may be positioned at the intersection of the inlet line 22, bypass line 112, and buffer tank inlet line 114. In this position, the flow control device 130 may be actuated (e.g., by controller 150 as previously described) to control flow through the buffer tank 110 (e.g., via the first flow path 140) and/or the bypass line 112 (e.g., via the second flow path 142) as previously described. Thus, at this alternative position, the flow control device 130 may still control a rate of fluid loss from the buffer tank 110 so as to maintain at least a minimum temperature in the outlet line 24 for facilitating sufficient performance of the second heat exchanger assembly 14 during operations. It should be appreciated that other embodiments described herein for the climate control system 10 (e.g., such as the embodiments depicted in FIGS. 4 and 5) may alternatively include the flow control device 130 at the position shown in FIG. 3.

Referring now to FIG. 4, in some embodiments of climate control system 10, an additional flow control device 132 may be positioned along the return line 26 of the fluid circuit 20. The flow control device 132 may comprise a three-way control valve that is similar to the flow control device 130. Thus, the flow control device 132 may include a first port and second port in fluid communication with the return line 26, and third port in fluid communication with a diversion line 118 that intersects with the inlet line 22 (and therefore upstream of both the buffer tank inlet line 114 and bypass line 112).

In addition, the flow control device 132 may be communicatively coupled to the controller 150 via any suitable wired and/or wireless connection as previously described, so that during operations, the controller 150 is configured to actuate the flow control device 132 to redirect at least some of the fluid flowing through the return line 26 to the inlet line 22 via the diversion line 118. Thus, the controller 150 may actuate the flow control device 132 to adjust a flow rate of fluid flowing along the diversion line 118. A coupling pipe 119 may connect the return line 26, downstream of the flow control device 132 and diversion line 118, to the inlet line 22 upstream of the diversion line 118. The coupling pipe 119 may be the same or different from the decoupler pipe 27 shown in FIG. 1. The coupling pipe 119 may be configured to equalize the pressure in the inlet line 22 with the pressure in the return line 26 downstream of the flow control device 132 so as to ensure a positive flow of fluid from the return line 26 to the inlet line 22 via the flow control device 132 and diversion line 118 during operations.

One or more additional sensors 166, 168 may be positioned along the return line 26. Specifically, a sensor 166 may be positioned on return line 26, downstream of the flow control device 132 and coupling pipe 119, and a sensor 168 may be positioned on return line 26, upstream of the flow control device 132. The sensors 166, 168 may be similar to the sensors 120, 122, 124, 126, previously described, and thus, the sensors 166, 168 may be configured to detect a temperature (or value(s) indicative thereof) of fluid flowing in the respective portion of the return line 26. In addition, the sensors 166, 168 may be communicatively coupled to the controller 150 via any suitable wired and/or wireless connection as previously described.

During a defrost operation for the first heat exchanger assembly 12 (FIG. 1), the controller 150 may actuate the flow control device 132 to divert some of the fluid flowing in the return line 26 back to the buffer tank assembly 100 via the diversion line 118. Without being limited to this or any other theory, the temperature of fluid flowing through the return line 26 may be higher than that output from the first heat exchanger assembly 12 to the inlet line 22 during a defrost operation. As a result, during a defrost operation with the first heat exchanger assembly 12, the controller 150 may actuate the flow control device 132 to divert at least some of the warmer fluid flowing in the return line 26 to the inlet line 22 so as to increase a temperature of the fluid flowing through both the first flow path 140 and the second flow path 142. The increase in temperature of the fluid flowing through the flow paths 140, 142 may, in turn, allow the controller 150 to reduce a flow of higher temperature fluid out of the buffer tank 110 via the flow control device 130 while still maintaining the minimum temperature in the outlet line 24 for sufficient or adequate heating performance of the second heat exchanger assembly 14.

In some specific embodiments, temperature of the fluid in the return line 26 may be greater than about 40°F, such as, for instance, about 70°F. As previously described, the fluid output from the first heat exchanger assembly 12 may be relatively cold, such as at about 40°F in some embodiments. Thus, diverting some of the fluid in the return line 26 to the inlet line 22 via the diversion line 118 may increase a temperature of the fluid flowing in the inlet line 22 to about 60°F in some embodiments. This slightly warmed fluid may be provided to both the bypass line 112 and buffer tank 110, and as a result, the controller 150 may reduce a flow of the higher temperature fluid out of the buffer tank 110 via the flow control device 130 while maintaining the minimum temperature for adequate heating performance of the second heat exchanger assembly 14 in the outlet line 24 (e.g., about 75°F in some embodiments as previously described).

In some embodiments, the controller 150 may actuate the flow control device 132 to divert some fluid from the return line 26 to the buffer tank assembly 100 based on an output from one or more of the sensors 120, 122, 124, 126, 166, 168 positioned in the fluid circuit 20. For instance, in some embodiments, the controller 150 may actuate the flow control device 132 to provide a desired flow rate of fluid through the diversion line 118 based on a comparison of the temperatures of fluid in the return line 26 and the inlet line 22 via the outputs from the sensors 168 and 120, respectively (which again may be referred to as a so-called "feedforward" control scheme).

In some embodiments, there may be some positive flow of fluid from the inlet line 22 to the return line 26 via the coupling pipe 119, which may lower a temperature of fluid in the return line 26. As a result, the controller 150 may actuate the flow control device 132 so as to maintain a sufficient flow rate of warmer fluid through the return line 26 to provide a minimum return temperature to the first heat exchanger assembly 12 via an output from the sensor 166 (which again may be referred to as a so-called "feedback" control scheme).

Therefore, diverting at least some of the warmer fluid from the return line 26 back to the buffer tank assembly 100 via the flow control device 132 may reduce a rate by which higher temperature fluid is flushed from the buffer tank 110 during a defrost operation of the first heat exchanger assembly 12. This may in turn allow the first heat exchanger assembly 12 to operate in a defrost operation for a longer period of time without negatively affecting the heating performance of the second heat exchanger assembly 14.

Referring now to FIG. 5, in some embodiments, the buffer tank assembly 100 may include a recirculation line 117 that extends from the buffer tank outlet line 116 to the return line 26 downstream of the flow control device 132 and upstream of the sensor 166 so as to allow additional flow control within the fluid circuit 20 during operation of the climate control system 10. Thus, the recirculation line 117 may bypass the second heat exchanger assembly 14 between the buffer tank 110 and the return line 26. Another flow control device 134 may be positioned at the intersection of the recirculation line 117 and the return line 26. The flow control device 134 may comprise a three-way control valve that is similar to the flow control devices 130, 132. Thus, the flow control device 134 may include a first port and second port in fluid communication with the return line 26, and third port in fluid communication with the recirculation line 117.

In addition, the flow control device 134 may be communicatively coupled to the controller 150 via any suitable wired and/or wireless connection, so that during operations, the controller 150 is configured to actuate the flow control device 134 to redirect at least some of fluid out of the buffer tank 110 to the return line 26 via the recirculation line 117. Thus, the flow control device 134 may be configured to adjust a flow rate of fluid flowing along the recirculation line 117 during operations. As will be described in more detail below, the configuration of the fluid circuit 20 and buffer tank assembly 100 shown in FIG. 5 may facilitate both recirculation of fluid from the buffer tank 110 to the return line 26 via the recirculation line 117 and flow control device 134, and the diversion of fluid from the inlet line 22 to the return line via the diversion line 118 and flow control device 132. To facilitate the flow from the inlet line 22 to the return line 26 via the diversion line 118, the coupling pipe 119 shown in the embodiment of FIG. 4 may be replaced with a coupling pipe 115 extending between the return line 26 and the bypass line 112. The coupling pipe 115 may be configured to equalize the pressure in the return line 26, upstream of the flow control devices 132, 134 with the pressure in the bypass line 112.

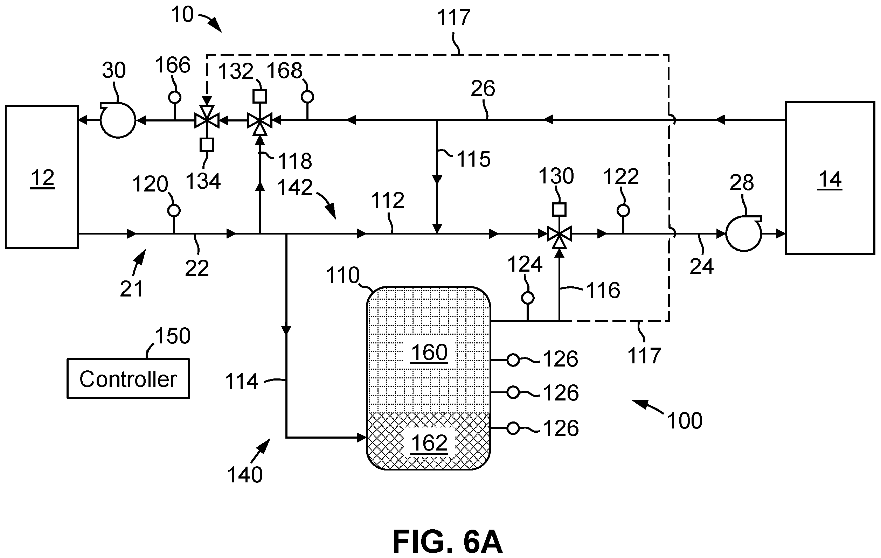

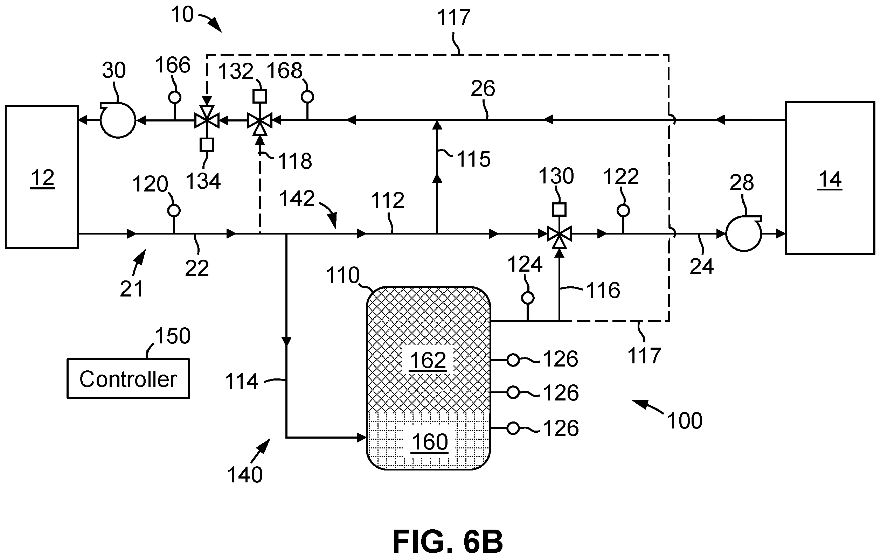

Referring now to FIG. 6A, a defrost operation for the first heat exchanger assembly 12 for the embodiment of climate control system 10 shown in FIG. 5 is illustrated. In order to simplify the drawing of FIG. 6A (and FIG. 6B described in more detail below), some elements of the climate control system 10 shown in FIG. 5 have been omitted (e.g., such as the communicative connections between the sensors 120, 122, 124, 126, 166, 168 and flow control devices 130, 132, 134, and controller 150). During the defrost operation for the first heat exchanger assembly 12, the colder fluid 162 emitted from the first heat exchanger assembly 12 may be flowed to the buffer tank 110 via the first flow path 140 and through the bypass line 112, and controller (FIG. 5) may actuate the flow control device 130 to mix in a sufficient flow rate of higher temperature fluid 160 from the buffer tank 110 to provide a minimum temperature for the fluid flowing in the outlet line 24 as previously described. In addition, the controller 150 may also actuate the flow control device 132 to divert some fluid from the inlet line 22 to the return line 26 which may equalize the pressure between the return line 26 and inlet line 22 upstream of the bypass line 112 and thereby promote a positive flow of fluid from the return line 26 into the bypass line 112 via the coupling pipe 115. As a result, the fluid flowing through the bypass line 112 may be warmed (at least slightly) by the fluid flowing through the coupling pipe 115 so as to allow controller 150 to minimize the amount (or flow rate) of higher temperature fluid flowing out of the buffer tank 110 to the outlet line 24 via the buffer tank outlet line 116 and flow control device 130.

In addition, the controller 150 may actuate the flow control device 132 so as to ensure that the temperature of the fluid flowing back to the first heat exchanger assembly 12 is above a minimum temperature to facilitate the defrost operation. Specifically, in some embodiments, the controller 150 may actuate the flow control device 132 during the defrost operation illustrated in FIG. 6A using a feedback control scheme whereby the flow control device 132 is actuated to control a flow rate of fluid flowing through the diversion line 118 to the return line 26 based on the temperature of the fluid in the return line 26 detected via the sensor 166. Further, in some embodiments, the flow control device 134 may prevent flow of fluid into the return line 26 from the recirculation line 117 (which is indicated in FIG. 6A with a dotted or broken line for recirculation line 117).

In some specific embodiments, the fluid flowing through the inlet line 22 during a defrost operation with the first heat exchanger assembly 12 may be below 50°F, such as at about 40°F, and the temperature of the fluid flowing through the return line 26 may be greater than about 50°F, such as at about 70°F. In addition, the buffer tank 110 may have relatively high temperature water (e.g., above 100°F, such as at about 120°F) stored therein from previous operation of the climate control system 10 in the heating mode as previously described. The controller 150 may actuate the flow control device 132 so as to maintain a temperature of the fluid flowing in the return line 26, downstream of the flow control device 132 to about 60°F to ensure a sufficient temperature for operating the first heat exchanger assembly 12 in the defrost operation. Moreover, in some embodiments, the positive flow of fluid from the return line 26 to the bypass line 112 via the coupling pipe 115 may raise the temperature flowing through the bypass line 112 to about 60°F in some embodiments, and the controller 150 may actuate the flow control device 130 to allow enough flow of higher temperature fluid out of the buffer tank 110 to further raise the temperature of the fluid in the outlet line 24 to about 75°F to ensure adequate heating performance of the second heat exchanger assembly 14.

Referring now to FIG. 6B, after the cessation of the defrost operation in FIG. 6A, the climate control system 10 may be operated in a heating mode to recharge the buffer tank 110 with higher temperature fluid 160 as previously described. In the embodiment of FIG. 6B, the controller 150 may actuate the flow control device 130 to flush colder fluid 162 out of the buffer tank 110 via the outlet line 24 while preventing the temperature of the fluid in the outlet line 24 from falling below a minimum value for operation of the second heat exchanger assembly 14 as previously described. In addition, during these operations, the controller 150 may also actuate the flow control device 132 so as to prevent the diversion of fluid from the inlet line 22 to the return line 26 via the diversion line 118 (which is indicated in FIG.6B with a dotted or broken line for diversion line 118). Preventing the flow of fluid along the diversion line 118 may, in turn facilitate or promote a positive flow of fluid from the bypass line 112 to the return line 26 via the coupling pipe 115. Further, the controller 150 may actuate the flow control device 134 to prevent the flow of fluid from the buffer tank 110 to the return line 26 via the recirculation line 117 (which is again indicated in FIG. 6B with a dotted or broken line for recirculation line 117).

For instance, in some specific embodiments, the temperature of the fluid flowing through the inlet line 22 during the recharge operation may be relatively high, such as at about 100°F, and the temperature of the fluid through the return line may be less than that in the inlet line 22, such as at about 70°F. The positive flow of fluid from the bypass line 112 to the return line 26 via the coupling pipe 115 may increase the temperature in the return line 26, slightly, such as to about 75°F in some embodiments. The fluid in the buffer tank 110 may be relatively cold due to the previous defrost operation, and may be below 50°F, such as at about 40°F in some embodiments. However, the controller 150 may actuate the flow control device 130 so as to modulate the flow of fluid out of the buffer tank 110 into the outlet line 24 so that the temperature of the fluid flowing through the outlet line 24 to the second heat exchanger assembly 14 may be maintained at a suitable temperature (such as about 75°F in some embodiments) to ensure adequate heating performance of the second heat exchanger assembly 14 during operations.

As previously described, the second heat exchanger assembly 14 may transfer heat (via one or more heat exchangers) between the fluid circuit 20 and one or more conditioned spaces 16. In some embodiments, a conditioned spaces 16 or multiple conditioned spaces 16 may comprise a thermal energy storage (TES) system that is configured to act as an additional thermal source or sink to improve the efficiency of the climate control system 10. For instance, FIGS. 7A-7C illustrate operations with the embodiment of climate control system 10 shown in FIG. 5 when charging or discharging a thermal storage system (TES) 17 that is positioned and configured to be at least one of the conditioned spaces 16 of second heat exchanger assembly 14. The TES 17 may comprise an ice-based TES that is configured to freeze or melt water ice to discharge or store thermal energy, respectively, during operations. As was previously described for FIGS. 6A and 6B, in order to simplify the drawing of FIGS. 7A-7C, some elements of the climate control system 10 shown in FIG. 5 have been omitted (e.g., such as the communicative connections between the sensors 120, 122, 124, 126, 166, 168 and flow control devices 130, 132, 134, and controller 150).

Specifically, FIG. 7A illustrates an operation of climate control system 10 to melt ice in the TES system 17 so as to store thermal energy therein for later use. As will be described in more detail below, the buffer tank assembly 100 may facilitate the thermal storage in the TES system 17 by ensuring a sufficient temperature to melt ice in the TES system 17 and simultaneously providing a minimum temperature for fluid returning to the first heat exchanger assembly 12 via the return line 26.

Specifically, during the operations depicted in FIG. 7A, warm fluid may be supplied to the inlet line 22 from the first heat exchanger assembly 12. The warm fluid in inlet line 22 may eventually be used to melt ice in the TES system 17 so as to store thermal energy therein. As a result, the fluid output from the second heat exchanger assembly 14 into return line 26 may be relatively cold, and may be close to the freezing temperature of water (e.g., below 35°F in some embodiments). These low temperatures in the return line 26 may be too low to support operation of the first heat exchanger assembly 12. Accordingly, the controller 150 may actuate the flow control device 132 so as to divert some of the warm water from the inlet line 22 back to the return line 26 via the diversion line 118 to ensure a minimum temperature of fluid flowing to the first heat exchanger assembly 12. The positive flow of fluid from the inlet line 22 to the return line 26 via the diversion line 118 may also encourage a positive flow of colder fluid from the return line 26 to the bypass line 112 via the coupling pipe 115, which may reduce a temperature of the fluid flowing through the bypass line 112 to the outlet line 24. As a result, the controller 150 may actuate the flow control device 130 to modulate the flow of warmer fluid 160 out of the buffer tank 110 to the outlet line 24 so as to ensure an adequate temperature of the fluid flowing to the second heat exchanger assembly 14 to, for example, melt ice in the TES system 17, provide adequate heating to the other conditioned spaces 16, etc.

In some embodiments, the controller 150 may actuate the flow control devices 130, 132 during the ice melting operations depicted in FIG. 7A based on a feedback control scheme and/or a feedforward control scheme as previously described. For instance, the controller 150 may actuate the flow control device 132 via a feedback control scheme based on an output from the sensor 166 and/or via a feedforward control scheme based on an output from the sensor 168. In either case, the controller 150 may actuate the flow control device 132 to ensure a minimum temperature of fluid returned to the first heat exchanger assembly 12. Similarly, the controller 150 may also actuate the flow control device 130 via a feedback control scheme based on an output from the sensor 122 and/or via a feedforward control scheme based on an output from sensors one or more of the sensors 120, 124, 126, 168, etc. Again, in either case, the controller 150 may actuate the flow control device 130 to ensure a sufficient temperature (e.g., a maximum temperature) for fluid provided to the TES system 17 in some embodiments.

In some specific embodiments, during the operations depicted in FIG. 7A, the fluid flowing through the inlet line 22 from the first heat exchanger assembly 12 may be relatively warm, such as near about 100°F, or at about 90°F. However, the temperature of the fluid flowing through the return line 26 may be significantly lower as a result of the thermal storage (e.g., ice melting) in the TES system 17. For instance, the temperature of the fluid flowing through the return line 26 from the second heat exchanger assembly 14 may be near the freezing point of water, such as about 33°F. In addition, the buffer tank 110 may have relatively high temperature water (e.g., near about 100°F, such as at about 90°F) stored therein from previous operation of the climate control system 10 in the heating mode as previously described. The controller 150 may actuate the flow control device 132 so as to maintain a temperature of the fluid flowing in the return line 26, downstream of the flow control device 132 to about 60°F to ensure a sufficient temperature for operating the first heat exchanger assembly 12 in the defrost operation. Moreover, in some embodiments, the positive flow of fluid from the return line 26 to the bypass line 112 via the coupling pipe 115 may lower the temperature flowing through the bypass line 112, and the controller 150 may actuate the flow control device 130 to allow enough flow of higher temperature fluid out of the buffer tank 110 to further ensure that the temperature of the fluid in the outlet line 24 to about 50°F to ensure adequate heating performance of the second heat exchanger assembly 14 (e.g., for continued thermal storage in the TES system 17, heating for other conditioned spaces 16, etc.).

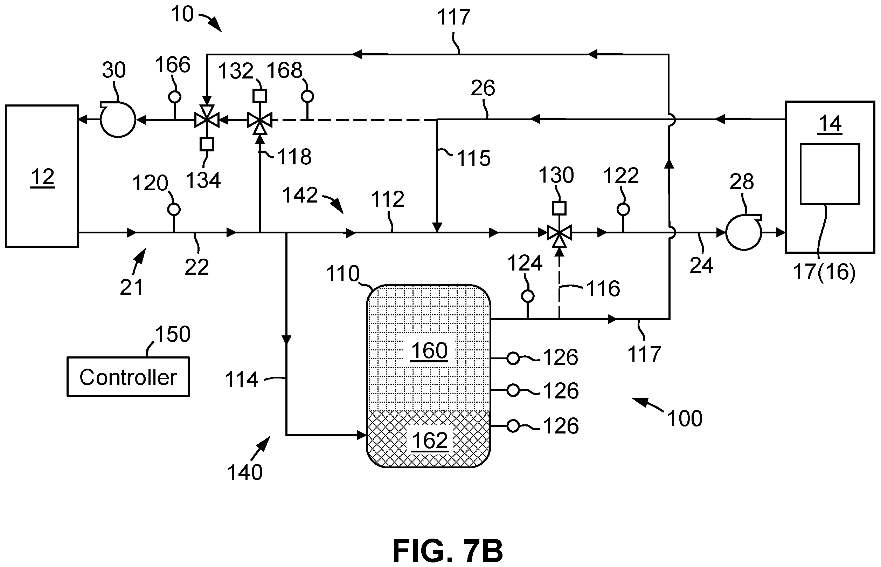

If while providing thermal energy to the TES system 17, the first heat exchanger assembly 12 enters a defrost operation, the controller 150 may divert fluid from the buffer tank assembly 100 to ensure a sufficient temperature for fluid returned to the first heat exchanger assembly 12 to support both the defrost operation and the thermal storage operation via the TES system 17. Specifically, with reference to FIG. 7B, when the first heat exchanger assembly 12 initiates the defrost operation, the fluid output from the first heat exchanger 12 may drop (e.g., to below 50°F, such as to about 40°F in some embodiments). However, the temperature of the fluid output from first heat exchanger assembly 12 may still be above the freezing point of water so that it may still be utilized to melt ice in the TES system 17. Thus, during the combined defrost and thermal storage operation depicted in FIG. 7B, the controller 150 may actuate the flow control device 132 to divert some of the fluid in the inlet line 22 back to the first heat exchanger assembly 12 and to prevent the cold fluid flowing in the return line 26 from returning back to the first heat exchanger assembly 12 as previously described with reference to FIG. 7A. The positive flow of fluid from the inlet line 22 to the return line 26 via the diversion line 118 and the prevention of flow from the second heat exchanger assembly 14 to the first heat exchanger assembly 12 via the return line 26 may promote a diversion of fluid output from the second heat exchanger assembly 14 to the bypass line 112 via the coupling pipe 115.

The relatively cold fluid output from the heat exchanger assembly 14 may decrease a temperature of the fluid flowing in bypass line 112. However, the temperature of the fluid output from bypass line 112 to the outlet line 24 may still be above a freezing temperature of water (e.g., above about 32°F) so as to facilitate further ice-melting in the TES system 17. As a result, the controller 150 may actuate the flow control device 130 to prevent fluid in the buffer tank 110 from flowing into the outlet line 24 via the buffer tank outlet line 116, so as to reduce the thermal energy loss from the buffer tank 110 during operations.

In addition, the fluid output from the first heat exchanger assembly 12 and diverted to the return line 26 via the diversion line 118 and flow control device 132 may be too low to support further defrost operation in the first heat exchanger assembly 12. Accordingly, the controller 150 may actuate the flow control device 134 to flow warmer fluid 160 in the buffer tank 110 back to the first heat exchanger assembly 12 via the recirculation line 117. The warmer fluid 160 in the buffer tank 110 may have been previously collected therein prior to initiation of the defrost operation for first heat exchanger assembly 12. The warmer fluid 160 routed through the recirculation line 117 may mix with the cooler fluid flowing through the diversion line 118 via the flow control device 132 to provide a minimum temperature fluid to the first heat exchanger assembly 12 for supporting the defrost operation therein.

In some embodiments, the controller 150 may actuate the flow control devices 130, 132 during the ice melting and defrost operations depicted in FIG. 7B based on a feedback control scheme and/or a feedforward control scheme. For instance, the controller 150 may actuate the flow control devices 132, 134 via a feedback control scheme based on an output from the sensor 166 and/or via a feedforward control scheme based on an output from one or more of the sensors 120, 124, 126. In either case, the controller 150 may actuate the flow control devices 132, 134 to ensure a minimum temperature of fluid returned to the first heat exchanger assembly 12.

In some specific embodiments, during the operations depicted in FIG. 7B, the fluid flowing through the inlet line 22 during a defrost operation with the first heat exchanger assembly 12 may be below 50°F, such as at about 40°F, and the temperature of the fluid flowing through the return line 26 may again be relatively close to freezing (e.g., for water) such as at about 33°F. In addition, the buffer tank 110 may have relatively high temperature water (e.g., near about 100°F, such as at about 90°F) stored therein from previous operation of the climate control system 10 in the heating mode as previously described. The controller 150 may actuate the flow control devices 132, 134 so as to maintain a temperature of the fluid flowing in the return line 26 to the second heat exchanger assembly 14, at about 60°F to ensure a sufficient temperature for operating the first heat exchanger assembly 12 in the defrost operation. Moreover, in some embodiments, the positive flow of fluid from the return line 26 to the bypass line 112 via the coupling pipe 115 may lower the temperature flowing through the bypass line 112 to relatively close to freezing, but still high enough to facilitate the thermal storage operation (e.g., ice melting) for the TES system 17 (e.g., such as above 32°F, or at about 35°F in some embodiments).

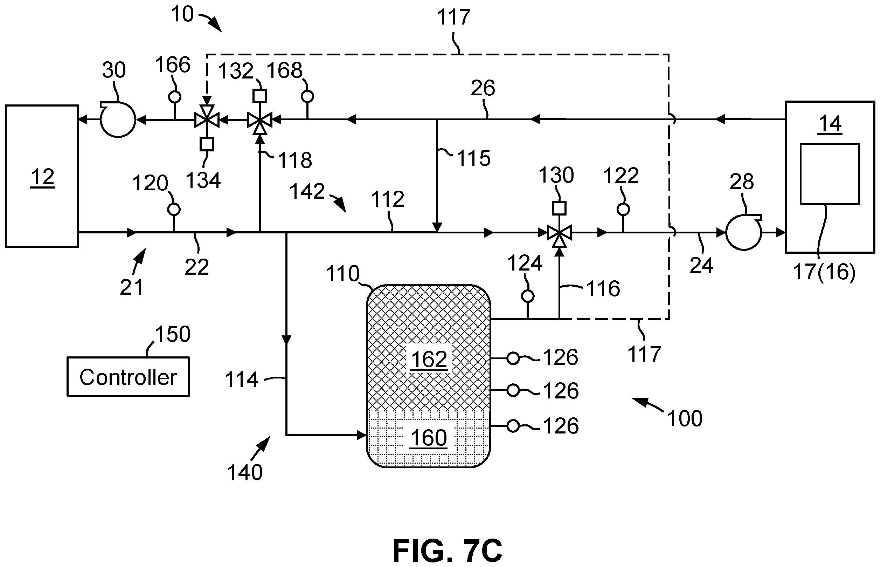

Referring now to FIG. 7C, after the cessation of the defrost operation in FIG. 7B, the climate control system 10 may be operated in a heating mode to recharge the buffer tank 110 with higher temperature fluid 160 while continuing to support a thermal storage operation (e.g., ice melting) via the TES system 17 as previously described. In the embodiment of FIG. 7C, the controller 150 may actuate the flow control device 130 to flush colder fluid 162 out of the buffer tank 110 via the buffer tank outlet line 116 and outlet line 24 while preventing the temperature of the fluid in the outlet line 24 from falling below a minimum value to support the thermal storage operation via the TES system 17 as previously described. In addition, during these operations, the controller 150 may also actuate the flow control device 132 so as to allow the diversion of fluid from the inlet line 22 to the return line 26 via the diversion line 118 so as to ensure an adequate temperature for fluid flowing back to the first heat exchanger assembly 12. In addition, diverting some of the flow out of the inlet line 22 to the return line 26 via the flow control device 132 may also facilitate positive flow of fluid to the bypass line 112 from the return line 26 via the coupling pipe 115. Thus, the controller 150 may actuate the flow control device 130 to facilitate a sufficient mixture of the cold fluid emitted from second heat exchanger assembly 14 via return line 26 and coupling pipe 115 and the relatively warmer fluid from the bypass tank 110 (but still cooler than the fluid output from first heat exchanger assembly 12) to provide a fluid having a sufficient temperature (e.g., above the freezing point of water) to facilitate the thermal storage operation with the TES system 17. Further, the controller 150 may actuate the flow control device 134 to prevent the flow of fluid from the buffer tank 110 to the return line 26 via the recirculation line 117.

In some embodiments, the controller 150 may actuate the flow control devices 130, 132 during the combined buffer tank recharge and ice melting operations depicted in FIG. 7C based on a feedback control scheme and/or a feedforward control scheme. For instance, the controller 150 may actuate the flow control device 132 via a feedback control scheme based on an output from the sensor 166 and/or via a feedforward control scheme based on an output from one or more of the sensors 120, 168. In either case, the controller 150 may actuate the flow control device 132 to ensure a minimum temperature of fluid returned to the first heat exchanger assembly 12. Similarly, the controller 150 may also actuate the flow control device 130 via a feedback control scheme based on an output from the sensor 122 and/or via a feedforward control scheme based on an output from sensors one or more of the sensors 120, 124, 126, 168, etc. Again, in either case, the controller 150 may actuate the flow control device 130 to ensure a sufficient temperature (e.g., a maximum temperature) for fluid provided to the TES system 17 in some embodiments.

In some specific embodiments, the temperature of the fluid flowing through the inlet line 22 during the recharge operation may be relatively high, such as close to about 100°F (e.g., about 90°F), and the temperature of the fluid through the return line 26 may be substantially less than that in the inlet line 22, such as near the freezing point of water (e.g., at about 33°F). The positive flow of fluid from the bypass line 112 to the return line 26 via the coupling pipe 115 may mix with the relatively warmer water from the buffer tank 110 via the flow control device 130 to ensure a minimum temperature in the outlet line 24 to support thermal storage operations with TES system 17 (e.g., above freezing, such as about 35°F).

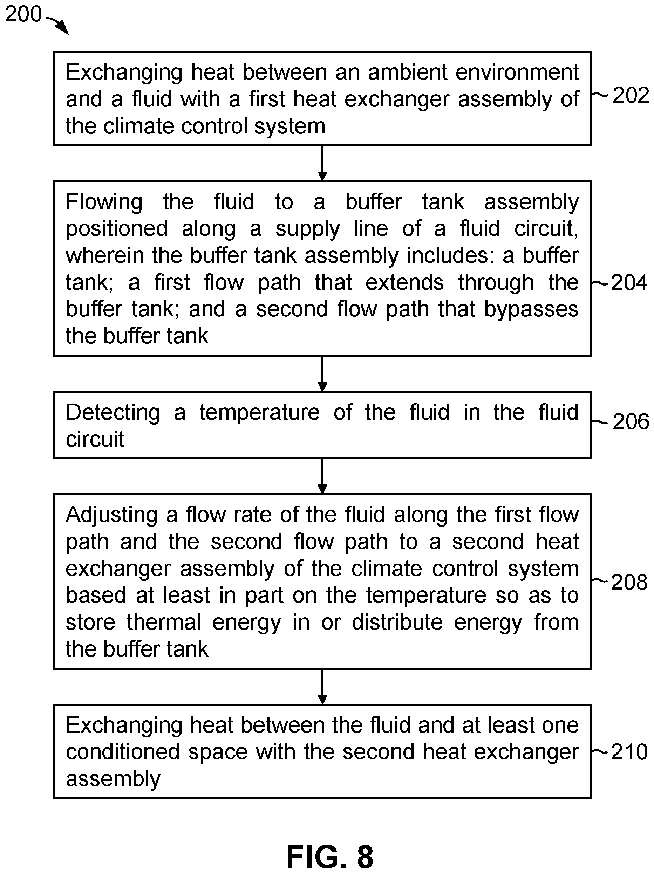

Referring now to FIG. 8, a method 200 of operating a climate control system is shown according to some embodiments. Method 200 may be practiced using embodiments of the climate control system 10 described herein (FIGS. 1-7C). Thus, in describing method 200, continuing reference will be made to embodiments of the climate control system 10 described herein and shown in FIGS. 1-7C. However, it should be appreciated that method 200 may be practiced using other climate control systems that may be different in at least some respects to embodiments of the climate control system 10. Thus, the reference to embodiments of the climate control system 10 should not be interpreted as limiting all implementations of the method 200.

Initially, method 200 includes exchanging heat between an ambient environment and a fluid with a first heat exchanger assembly of the climate control system at block 202. For instance, as previously described for the climate control system 10 (FIG. 1), the first heat exchanger assembly 12 may include a refrigerant fluid circuit 13 that is configured to exchange heat between the ambient environment and the fluid circuit 20.

Next, method 200 includes, at block 204, flowing the fluid to a buffer tank assembly positioned along a fluid circuit. The buffer tank assembly includes a buffer tank, a first flow path that extends through the buffer tank, and a second flow path that bypass es the buffer tank. For instance, as previously described for the climate control system 10 (FIG. 1), the buffer tank assembly 100 may include a first flow path 140 that extends through the buffer tank 110, and a second flow path 142 that extends through the bypass line 112 that therefore bypasses the buffer tank 110.

In addition, method 200 includes detecting a temperature of the fluid in the fluid circuit at block 206, and adjusting a flow rate of the fluid along the first flow path and the second flow path to a second heat exchanger assembly of the climate control system based at least in part on the temperature so as to store thermal energy in or distribute energy from the buffer tank at block 208. For instance, as described for the climate control system 10, the flow control device 130 may be adjusted by the controller 150 so as to adjust the flow rates of fluid along both the first flow path 140 and the second flow path 142 so as to selectively bypass the buffer tank 110 and/or to flow fluid into or out of the buffer tank 110 during operations. As previously described, by selectively flowing fluid into or out of the buffer tank 110, thermal energy (e.g., via warm or hot fluid) may be selectively stored in or distributed from the buffer tank 110 so as to counteract temperature fluctuations in the fluid circuit 20.

Further, method 200 includes exchanging heat between the fluid and at least one conditioned space with the second heat exchanger assembly at block 210. For instance, as previously described for the climate control system 10, the second heat exchanger assembly 14 may include one or more heat exchangers that are configured to exchange heat between the fluid in the fluid circuit 20 and one or more conditioned spaces 16, which may include one or more indoor spaces of a larger building (e.g., an office building, apartment complex, industrial complex, etc.), one or more thermal energy storage (TES) systems (e.g., ice-based thermal storage cooling/heating systems such as TES 17 shown in FIGS. 7A-7C and described herein), one or more hot water generation systems, etc.

As explained above and reiterated below, the present disclosure includes, without limitation, the following example implementations.

Clause 1: A climate control system comprising: a first heat exchanger assembly; a second heat exchanger assembly; a fluid circuit configured to circulate a fluid between the first heat exchanger assembly and the second heat exchanger assembly, wherein the fluid circuit includes: a supply line configured to flow fluid from the first heat exchanger assembly to the second heat exchanger assembly; a buffer tank assembly positioned along the supply line, the buffer tank assembly including a buffer tank and a flow control device, wherein the buffer tank assembly includes: a first flow path that extends through the buffer tank; and a second flow path that bypasses the buffer tank; and one or more sensors configured to detect a temperature of fluid in the fluid circuit; and a controller that is configured to actuate the flow control device to adjust a flow rate along the first flow path and the second flow path based on an output from the one or more sensors to store thermal energy in or distribute thermal energy from the buffer tank.

Clause 2: The climate control system of any of the clauses, wherein the flow control device comprises a three-way flow control valve that is configured to flow fluid along the first flow path, the second flow path, or a combination of the first flow path and the second flow path based on an output from the one or more sensors.

Clause 3: The climate control system of any of the clauses, wherein the supply line includes an inlet line extending between the first heat exchanger assembly and the buffer tank assembly and an outlet line extending between the buffer tank assembly and the second heat exchanger assembly, wherein the fluid circuit further comprises: a return line configured to flow fluid from the second heat exchanger assembly to the first heat exchanger assembly; a diversion line extending between the return line and the inlet line; and a second flow control device that is configured to control fluid flow along the diversion line, wherein the controller is configured to actuate the second flow control device based on an output from the one or more sensors.

Clause 4: The climate control system of any of the clauses, wherein the fluid circuit further comprises: a recirculation line that is configured to flow fluid from an outlet of the buffer tank to the return line, wherein the recirculation line bypasses the second heat exchanger assembly; and a third flow control device positioned along the return line that is configured to control fluid flow along the recirculation line to the return line, wherein the controller is configured to actuate the third flow control device based on an output from the one or more sensors.

Clause 5: The climate control system of any of the clauses, wherein the first heat exchanger assembly comprises an air-to-water heat pump.

Clause 6: The climate control system of any of the clauses, wherein the second heat exchanger assembly comprises distribution system for heating an indoor space.

Clause 7: The climate control system of any of the clauses, wherein the supply line includes an inlet line extending from the first heat exchanger assembly to the buffer tank assembly and an outlet line extending from the buffer tank assembly to the second heat exchanger assembly, and wherein the flow control device includes a first port in fluid communication with a bypass line that bypasses the buffer tank and a second port in fluid communication with the buffer tank.

Clause 8: The climate control system of any of the clauses, wherein the second port is in fluid communication with an inlet of the buffer tank, and wherein the flow control device includes a third port in fluid communication with the inlet line.

Clause 9: The climate control system of any of the clauses, wherein the second port is in fluid communication with an outlet of the buffer tank, and wherein the flow control device includes a third port in fluid communication with the outlet line.

Clause 10: A method of operating a climate control system, the method comprising: (a) exchanging heat between an ambient environment and a fluid with a first heat exchanger assembly of the climate control system; (b) flowing the fluid to a buffer tank assembly positioned along a supply line of a fluid circuit after (a), wherein the buffer tank assembly includes: a buffer tank; a first flow path that extends through the buffer tank; and a second flow path that bypasses the buffer tank; (c) detecting a temperature of the fluid in the fluid circuit; (d) adjusting a flow rate of the fluid along the first flow path and the second flow path to a second heat exchanger assembly of the climate control system based at least in part on the temperature so as to store thermal energy in or distribute energy from the buffer tank; and (e) exchanging heat between the fluid and at least one conditioned space with the second heat exchanger assembly after (d).

Clause 11: The method of any of the clauses, wherein (c) comprises detecting the temperature of fluid in the supply line downstream of the buffer tank assembly.

Clause 12: The method of any of the clauses, further comprising: (f) flowing the fluid from the second heat exchanger assembly to the first heat exchanger assembly through a return line of the fluid circuit after (e); (g) detecting a second temperature of the fluid in the return line; and (h) placing the return line in fluid communication with a portion of the supply line that is upstream of the buffer tank assembly based at least in part on the second temperature.

Clause 13: The method of any of the clauses, wherein (h) further comprises flowing the fluid from the return line to the supply line.

Clause 14: The method of any of the clauses, wherein (h) further comprises flowing the fluid from the supply line to the return line.

Clause 15: The method of any of the clauses, further comprising flowing the fluid from the buffer tank to the return line via a recirculation line that bypasses the second heat exchanger assembly based at least in part on the second temperature.

Clause 16: A buffer tank assembly for a hydronic climate control system, the buffer tank assembly comprising: a buffer tank including an inlet port and an outlet port; an inlet line connected to the inlet port; an outlet line connected to the outlet port; a bypass line connected to the inlet line and the outlet line so that the buffer tank assembly defines a first flow path from the inlet line to the outlet line through the buffer tank and a second flow path from the inlet line to the outlet line through the bypass line; and a flow control device in fluid communication with the buffer tank and the bypass line, wherein the flow control device is actuatable to control fluid flow along the first flow path and the second flow path.

Clause 17: The buffer tank assembly of any of the clauses, wherein the flow control device comprises a three-way control valve that is connected to the bypass line and at least one of the inlet line and the outlet line.

Clause 18: The buffer tank assembly of any of the clauses, wherein the flow control device is positioned at an intersection of the inlet line and the bypass line.

Clause 19: The buffer tank assembly of any of the clauses, wherein the flow control device is positioned at an intersection of the outlet line and the bypass line.

Clause 20: The buffer tank assembly of any of the clauses, wherein the inlet port is more proximate a bottom end than a top end of the buffer tank, and wherein the outlet port is more proximate the top end than the bottom end of the buffer tank.

The embodiments disclosed herein include buffer tank assemblies for a fluid circuit of a climate control system (e.g., such as a hydronic climate control system) that are configured to counteract temperature fluctuations in the fluid circuit and thereby preserve occupant comfort in the indoor space. In some embodiments, the buffer tank assemblies of the embodiments disclosed herein may have enhanced and dynamic flow control functionality that may further allow for a smaller or reduced size of the buffer tank without effecting the overall performance thereof. Accordingly, through use of the embodiments disclosed herein, a buffer tank assembly may more effectively counteract temperature fluctuations in the water circuit of a hydronic climate control system so as to improve an overall performance and efficiency of the climate control system.

The preceding discussion is directed to various exemplary embodiments. However, one of ordinary skill in the art will understand that the examples disclosed herein have broad application, and that the discussion of any embodiment is meant only to be exemplary of that embodiment, and not intended to suggest that the scope of the disclosure, including the claims, is limited to that embodiment.

The drawing figures are not necessarily to scale. Certain features and components herein may be shown exaggerated in scale or in somewhat schematic form and some details of conventional elements may not be shown in interest of clarity and conciseness.

In the discussion herein and in the claims, the terms "including" and "comprising" are used in an open-ended fashion, and thus should be interpreted to mean "including, but not limited to ...." Also, the term "couple" or "couples" is intended to mean either an indirect or direct connection. Thus, if a first device couples to a second device, that connection may be through a direct connection of the two devices, or through an indirect connection that is established via other devices, components, nodes, and connections. Further, when used herein (including in the claims), the words "about," "generally," "substantially," "approximately," and the like, when used in reference to a stated value mean within a range of plus or minus 10% of the stated value.

While exemplary embodiments have been shown and described, modifications thereof can be made by one skilled in the art without departing from the scope or teachings herein. The embodiments described herein are exemplary only and are not limiting. Many variations and modifications of the systems, apparatus, and processes described herein are possible and are within the scope of the disclosure. Accordingly, the scope of protection is not limited to the embodiments described herein, but is only limited by the claims that follow, the scope of which shall include all equivalents of the subject matter of the claims. Unless expressly stated otherwise, the steps in a method claim may be performed in any order. The recitation of identifiers such as (a), (b), (c) or (1), (2), (3) before steps in a method claim are not intended to and do not specify a particular order to the steps, but rather are used to simplify subsequent reference to such steps.

## Claims

1. A climate control system comprising:
a first heat exchanger assembly;
a second heat exchanger assembly;
a fluid circuit configured to circulate a fluid between the first heat exchanger assembly and the second heat exchanger assembly, wherein the fluid circuit includes:
a supply line configured to flow fluid from the first heat exchanger assembly to the second heat exchanger assembly;
a buffer tank assembly positioned along the supply line, the buffer tank assembly including a buffer tank and a flow control device, wherein the buffer tank assembly includes:
a first flow path that extends through the buffer tank; and
a second flow path that bypasses the buffer tank; and
one or more sensors configured to detect a temperature of fluid in the fluid circuit; and
a controller that is configured to actuate the flow control device to adjust a flow rate along the first flow path and the second flow path based on an output from the one or more sensors to store thermal energy in or distribute thermal energy from the buffer tank.

2. The climate control system of claim 1, wherein the flow control device comprises a three-way flow control valve that is configured to flow fluid along the first flow path, the second flow path, or a combination of the first flow path and the second flow path based on an output from the one or more sensors.

3. The climate control system of claim 2,
wherein the supply line includes an inlet line extending between the first heat exchanger assembly and the buffer tank assembly and an outlet line extending between the buffer tank assembly and the second heat exchanger assembly,
wherein the fluid circuit further comprises:
a return line configured to flow fluid from the second heat exchanger assembly to the first heat exchanger assembly;
a diversion line extending between the return line and the inlet line; and
a second flow control device that is configured to control fluid flow along the diversion line,
wherein the controller is configured to actuate the second flow control device based on an output from the one or more sensors.

4. The climate control system of claim 3, wherein the fluid circuit further comprises:
a recirculation line that is configured to flow fluid from an outlet of the buffer tank to the return line, wherein the recirculation line bypasses the second heat exchanger assembly; and
a third flow control device positioned along the return line that is configured to control fluid flow along the recirculation line to the return line,
wherein the controller is configured to actuate the third flow control device based on an output from the one or more sensors.

5. The climate control system of claim 4, wherein the first heat exchanger assembly comprises an air-to-water heat pump
optionally wherein the second heat exchanger assembly comprises distribution system for heating an indoor space.

6. The climate control system of claim 2,
wherein the supply line includes an inlet line extending from the first heat exchanger assembly to the buffer tank assembly and an outlet line extending from the buffer tank assembly to the second heat exchanger assembly, and
wherein the flow control device includes a first port in fluid communication with a bypass line that bypasses the buffer tank and a second port in fluid communication with the buffer tank.

7. The climate control system of claim 6, wherein the second port is in fluid communication with an inlet of the buffer tank, and wherein the flow control device includes a third port in fluid communication with the inlet line; or
wherein the second port is in fluid communication with an outlet of the buffer tank, and wherein the flow control device includes a third port in fluid communication with the outlet line.

8. A method of operating a climate control system, the method comprising:
(a) exchanging heat between an ambient environment and a fluid with a first heat exchanger assembly of the climate control system;
(b) flowing the fluid to a buffer tank assembly positioned along a supply line of a fluid circuit after (a), wherein the buffer tank assembly includes:
a buffer tank;
a first flow path that extends through the buffer tank; and
a second flow path that bypasses the buffer tank;
(c) detecting a temperature of the fluid in the fluid circuit;
(d) adjusting a flow rate of the fluid along the first flow path and the second flow path to a second heat exchanger assembly of the climate control system based at least in part on the temperature so as to store thermal energy in or distribute energy from the buffer tank; and
(e) exchanging heat between the fluid and at least one conditioned space with the second heat exchanger assembly after (d).

9. The method of claim 8, further comprising:
(f) flowing the fluid from the second heat exchanger assembly to the first heat exchanger assembly through a return line of the fluid circuit after (e);
(g) detecting a second temperature of the fluid in the return line; and
(h) placing the return line in fluid communication with a portion of the supply line that is upstream of the buffer tank assembly based at least in part on the second temperature.

10. The method of claim 9, wherein (h) further comprises flowing the fluid from the return line to the supply line; or
wherein (h) further comprises flowing the fluid from the supply line to the return line.

11. The method of claim 9 or 10, further comprising flowing the fluid from the buffer tank to the return line via a recirculation line that bypasses the second heat exchanger assembly based at least in part on the second temperature.

12. A buffer tank assembly for a hydronic climate control system, the buffer tank assembly comprising:
a buffer tank including an inlet port and an outlet port;
an inlet line connected to the inlet port;
an outlet line connected to the outlet port;
a bypass line connected to the inlet line and the outlet line so that the buffer tank assembly defines a first flow path from the inlet line to the outlet line through the buffer tank and a second flow path from the inlet line to the outlet line through the bypass line; and
a flow control device in fluid communication with the buffer tank and the bypass line, wherein the flow control device is actuatable to control fluid flow along the first flow path and the second flow path.

13. The buffer tank assembly of claim 12, wherein the flow control device comprises a three-way control valve that is connected to the bypass line and at least one of the inlet line and the outlet line.

14. The buffer tank assembly of claim 13, wherein the flow control device is positioned at an intersection of the inlet line and the bypass line; or
wherein the flow control device is positioned at an intersection of the outlet line and the bypass line.

15. The buffer tank assembly of claim 13 or 14, wherein the inlet port is more proximate a bottom end than a top end of the buffer tank, and wherein the outlet port is more proximate the top end than the bottom end of the buffer tank.
